# FASCICULE DE BREVET EUROPEEN

(11) **EP 4 154 551 B1**
(45) Date de publication et mention de la délivrance du brevet: **30.07.2025**
(21) Numéro de dépôt: 21732965.5
(22) Date de dépôt: 14.05.2021
(51) Int. Cl.: H04Q 9/00, G01D 4/00, G01D 5/39

(54) **SURVEILLANCE NUMÉRIQUE NON INTRUSIVE D'ÉQUIPEMENTS ET DE MACHINES EXISTANTS À L'AIDE DE L'APPRENTISSAGE AUTOMATIQUE ET DE LA VISION PAR ORDINATEUR**
NICHTINTRUSIVE DIGITALE ÜBERWACHUNG FÜR BESTEHENDE GERÄTE UND MASCHINEN MIT MASCHINENLERNEN UND COMPUTERVISION
NONINTRUSIVE DIGITAL MONITORING FOR EXISTING EQUIPMENT AND MACHINES USING MACHINE LEARNING AND COMPUTER VISION

(30) Priorité: 13.05.2020 FR 2004733
(43) Date de publication de la demande: 29.03.2023
(73) Titulaire: Eyegauge, 75008 Paris (FR)
(72) Inventeur: DENYSYUK, Rodion, 94700 Maison-Alfort (FR)
(74) Mandataire: Yes My Patent
(86) Numéro de dépôt international: PCT/FR2021/050844
(87) Numéro de publication internationale: WO 2021/229195

(56) Documents cités:
- EP-A1- 1 909 073
- EP-B1- 1 584 898
- WO-A1-2014/209373
- WO-A1-2017/057780
- WO-A1-2017/210330
- WO-A1-2017/212485
- WO-A1-98/13670
- US-A1- 2007 057 814
- US-A1- 2010 214 130
- US-A1- 2013 070 099
- US-A1- 2017 364 734
- US-A1- 2019 297 395

## Description

La présente invention concerne un système, un procédé et un appareil pour la surveillance numérique d'équipements et de machines existants.

Le fonctionnement efficace des différentes machines et équipements des secteurs de fabrication, de services publics, de mines, de bâtiments, d'agriculture et de transports nécessite une surveillance continue des différents paramètres de ces équipements pendant toute la durée de son exploitation. Traditionnellement, cette surveillance était effectuée par le personnel de maintenance d'équipements aux intervalles réguliers par inspection visuelle et enregistrement manuel des valeurs affichées par différents instruments et indicateurs positionnés soit directement sur l'équipement soit organisés en panneaux d'instruments et tableaux de bord.

Avec l'arrivée des moyens d'analyser efficacement les données numériques et de nouvelles solutions de connectivité, le concept de surveillance numérique continue des équipements a éliminé la nécessité d'un enregistrement manuel des paramètres. L'équipement digitalisé traduit l'état actuel et les paramètres de l'équipement surveillé en données de télémétrie qui peuvent en outre être sauvegardées, surveillées, visualisées et analysées sous forme numérique.

Cependant, les données de télémétrie ne peuvent être générées que par un équipement qui met en œuvre des interfaces numériques et des capacités de surveillance numérique. Par conséquent, un grand nombre de machines et d'équipements existants, également connus sous le nom « hérité », trouvés dans de nombreuses installations existantes ne peuvent pas fournir les données numériques. Le rééquipement de machines anciennes avec de nouveaux capteurs numériques ou le remplacement d'équipements nécessite des investissements importants et n'est pas toujours possible.

Le document US 2019/297395 A1 divulgue un dispositif de lecture automatique de compteurs adapté aux compteurs analogiques traditionnels et aux compteurs intelligents modernes. Le dispositif de lecture associé comprend un capteur d'images tel qu'un appareil photo numérique, une unité de vision artificielle pour convertir les images en données de lecture des compteurs et une unité de transmission et de réception sans fil.

Le système, le procédé et l'appareil de la présente invention proposent une solution rentable et non intrusive pour fournir des données de télémétrie numérique pour une multitude d'équipements et de machines héritées qui ne possèdent pas d'interfaces numériques et de capacités de surveillance numérique, y compris, mais sans s'y limiter, des moteurs, des générateurs, des systèmes de propulsion, de refroidissement, de chauffage, des conduits de gazes et de liquides.

L'invention concerne un procédé de fourniture de données de télémétrie de machines et d'équipements existants selon la revendication indépendante 1. D'autres modes particuliers de réalisation sont présents dans les revendications dépendantes.

Les dessins annexés illustrent l'invention :
- [Fig.1] Le système de surveillance et de fourniture de données de télémétrie
- [Fig.2] Les types d'instruments visuels pris en charge
- [Fig.3] Le dispositif de capture d'image
- [Fig.4] Le dispositif informatique
- [Fig.5] Le procédé de fourniture de données de télémétrie
- [Fig.6] Le procédé de capture des instantanés
- [Fig.7] Le procédé de correction de la perspective et de l'objectif ; les repères fiduciaires et les points de référence
- [Fig.8] Le procédé d'interprétation des instantanés
- [Fig.9] Le procédé de lecture d'une jauge circulaire analogique
- [Fig.10] Le procédé de lecture d'une jauge linéaire analogique
- [Fig.11] Le procédé de lecture d'un afficheur à LED alphanumérique
- [Fig.12] Le procédé de lecture d'un voyant lumineux individuel
- [Fig.13] Le procédé de lecture d'un jeu de voyants lumineux
- [Fig.14] Le procédé de lecture d'un dispositif de commande physique

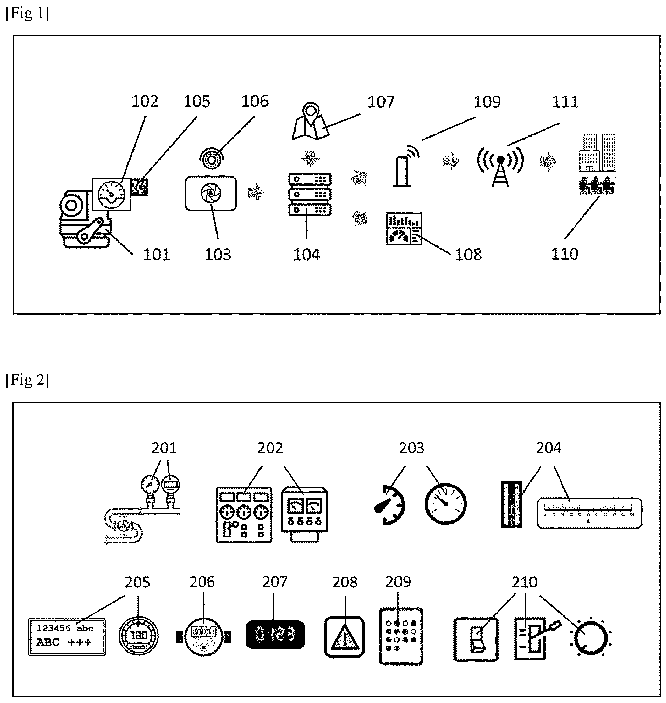

Selon la [Fig 1], le système de surveillance et de fourniture de données de télémétrie pour de machines et d'équipements existants comporte au moins une machine ou un équipement surveillé (101) muni d'au moins un instrument visuel pris en charge (102), au moins un dispositif de capture d'image (103), un dispositif informatique (104), facultativement, un ou plusieurs repères fiduciaires (105), facultativement, un ou plusieurs émetteurs de lumière (106), facultativement, un dispositif ou un sous-système de positionnement global (107), facultativement, un dispositif de visualisation de données (108), et un dispositif ou un sous-système de communication (109) capable de transférer des données vers des emplacements distants pour des équipes de maintenance et de surveillance (110) via des réseaux satellites ou terrestres (111).

Selon la [Fig 2], l'instrument visuel pris en charge est un dispositif indépendant (201) ou un groupe de dispositifs installés soit directement sur la machine ou l'équipement correspondant, soit déportés vers un tableau de bord ou un panneau d'instruments (202) dédié ou partagé avec d'autres équipements. L'instruments visuels représente la valeur actuelle réelle d'un paramètre physique, d'une configuration ou d'un état interne de la machine ou de l'équipement correspondant.

L'instrument visuel peut être l'un des appareils suivants : des jauges analogiques circulaires (203) et linéaires (204), des afficheurs alphanumériques digitaux (205), mécaniques (206) et à LED (207), des voyants lumineux indépendants (208) et de jeu de voyants lumineux (209). Il peut également s'agir d'un dispositif de commande physique, comprenant, mais sans s'y limiter, des interrupteurs, boutons poussoirs et rotatifs, poignées et leviers (210).

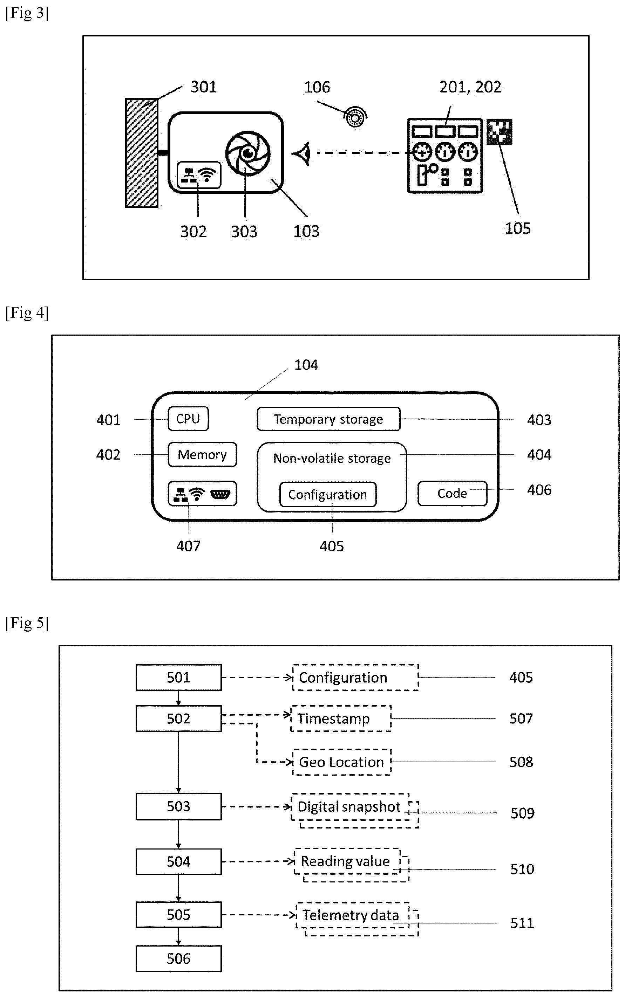

Selon la [Fig 3], le dispositif de capture d'image (103) est solidement attaché à une surface fixe ou à un autre support immobile (301) et est équipé d'une interface de réseau filaire ou sans fil ou d'interfaces de communication série (302) pour permettre la connectivité avec le dispositif informatique. Le dispositif de capture d'image comprend au moins un module optique (303) capable de capturer des images au format numérique dans une plage de lumière visible et, facultativement, infrarouge. Chaque module optique sert de source d'image indépendante et doit être positionné dans une ligne de visée de l'instrument visuel indépendant (201), du panneau d'instruments ou du tableau de bord (202) sur une certaine distance de manière à ne pas interférer avec les opérations de l'équipement surveillé et permettant une observation sans obstacle et un accès complet aux commandes et aux instruments par les agents de maintenance.

Facultativement, un ou plusieurs émetteurs de lumière visible et/ou infrarouge (106) sont positionnés de manière à éclairer l'instrument visuel, le panneau d'instruments ou le tableau de bord.

Le dispositif de capture d'image peut comporter plusieurs modules optiques indépendants situés à des distances et des angles de vue différents ciblant le même instrument visuel, le panneau d'instruments ou le tableau de bord pour une meilleure tolérance à un éventuel blocage temporaire de la ligne de visée par des personnes et des objets et pour une meilleure qualité de lecture de l'instrument.

Facultativement, un ou plusieurs repères fiduciaires (105) peuvent être placés sur ou à proximité d'instruments surveillés dans le champ de vision de module optique. Le repère fiduciaire est utilisé pour la correction de la distorsion de l'objectif et la transformation de la perspective ainsi comme l'origine d'un système de coordonnées (point de référence) pour la détection des instruments et pour la correction des vibrations. Le repère fiduciaire peut également être utilisé pour coder des identifiants de tableau de bord, de panneau et d'instruments et d'autres informations intéressantes sur les instruments proches. Le repère fiduciaire peut être implémenté en tant que AprilTag, marqueurs ArUco, QR-code ou une technologie similaire.

Selon la [Fig 4], le dispositif informatique (104) comprend au moins un CPU (401), une mémoire (402), au moins un support de stockage temporaire (403), au moins un support de stockage non volatile (404), au moins une configuration de déploiement (405) sauvegardée sur un support non volatile, au moins un logiciel (406) et une ou plusieurs interfaces de communications réseaux filaires ou sans fil et une ou plusieurs interfaces de communication série ou NMEA (407). Le dispositif informatique est capable de lire la configuration de déploiement (405), de récupérer, à des intervalles prédéfinis, des images numériques à partir de dispositifs de capture d'image (103) via une interface de communication réseau ou série (407), d'exécuter un logiciel (406) qui met en œuvre des algorithmes de la vision par ordinateur et d'apprentissage automatique.

Le dispositif informatique (104) peut facultativement récupérer des informations de localisation géographique, si l'équipement surveillé est situé sur un véhicule en mouvement ou un navire maritime, et l'heure précise actuelle à partir d'un dispositif de positionnement global ou d'un équipement similaire (107) capable de fournir la localisation géographique et l'heure précise actuelle selon, par exemple, la norme NMEA.

Le dispositif informatique peut sauvegarder localement sur un support de stockage non-volatile les données interprétées sous forme numérique et / ou les transmettre, à intervalles prédéfinis, via une interface réseau, à un dispositif de communication (109) capable de transférer des données vers des équipes de télémaintenance et de surveillance (110) via satellite ou réseaux terrestres (111).

Facultativement, le dispositif informatique peut directement transmettre la télémétrie vers au moins un sous-système de visualisation de données (108), capable d'afficher les données de télémétrie actuelles et historiques, comprenant au moins un moniteur, au moins un CPU, une mémoire, un stockage, au moins une interface d'utilisateur et au moins une interface de communication réseau filaire ou sans fil.

La [Fig 5] décrit le procédé de fourniture de données de télémétrie pour des machines et des équipements existants, exécutés par l'ensemble de dispositifs et sous-systèmes du système décrit. Le procédé est composé des étapes suivantes qui sont exécutées à des périodes prédéfinies.

La configuration de déploiement (405) est lue (501) par un dispositif informatique (104) à partir d'un support de stockage non volatile (404) au début du procédé. La configuration comporte, mais n'est pas limitée aux paramètres suivants :
- une liste des machines et équipements surveillés, leurs identifiants correspondants et, facultativement, des informations sur leur emplacement sur un site ou à bord d'un véhicule ou d'un navire
- une liste des sources d'images numériques et de leurs configurations correspondantes, y compris, mais sans s'y limiter, les détails de connexion, les propriétés des modules optiques, les opérations de prétraitement des images numériques
- les identificateurs d'instruments individuels pour chaque source d'image et leurs emplacements, spécifiés sous forme de coordonnées de la région d'intérêt correspondante (ROI) pour chaque source d'image
- le type d'instrument individuel
- les valeurs minimales et maximales acceptables de l'instrument individuel
- la précision de lecture acceptable de l'instrument individuel
- facultativement, des paramètres de réglage fin pour l'algorithme à appliquer pour interpréter certains instruments individuels
- facultativement, pour les instruments analogiques, les coordonnées des repères d'échelle de valeur minimale et maximale
- facultativement, pour les instruments analogiques circulaires, les coordonnées du point fixe de l'aiguille autour de laquelle elle tourne
- facultativement, pour les instruments analogiques, limites de la zone acceptable de l'emplacement de l'aiguille
- facultativement, pour les instruments analogiques, des informations sur l'échelle de l'instrument qui peuvent être non uniforme (par exemple, l'échelle trouvée dans les instruments du type « moving iron »)
- facultativement, pour les voyants lumineux indépendants, des images modèles numériques représentant tous les états possibles de la voyant
- facultativement, pour les jeux de voyants, une matrice définissant les emplacements relatifs des voyants individuels et leurs identifiants correspondants
- facultativement, pour les dispositifs de commande physiques, des images de modèle numérique représentant tous les états possibles du dispositif de commande
- facultativement, toutes les métadonnées supplémentaires qui peuvent être attachées à un instrument

Si l'équipement est situé à bord d'un véhicule ou d'un navire maritime, à des intervalles prédéfinis, le dispositif informatique (104) récupère (502) la localisation géographique actuelle (508) et l'horodatage actuel (507) à partir d'au moins une source, telle que dispositif de positionnement global (GNSS) ou autre équipement embarqué capable de fournir la localisation géographique et l'heure précise actuelle conformément à la norme NMEA, y compris, mais sans s'y limiter, les systèmes embarqués GPS, ECDIS et AIS (107).

Si aucun dispositif de positionnement global n'est présent, l'horodatage actuel (507) peut être récupéré à partir d'une autre source fiable de l'heure actuelle, par exemple à partir d'une horloge interne du dispositif informatique ou de l'heure réseau du dispositif de communication (109).

Si la connectivité peut être établie avec un système ECDIS ou AIS embarqué, le dispositif informatique peut accéder à ces systèmes pour récupérer l'identification du véhicule ou du navire.

Un dispositif de capture d'image, à la demande du dispositif informatique, capte (503) au moins un instantané numérique (509) d'au moins un instrument visuel, un panneau d'instruments ou un tableau de bord à partir d'au moins une source d'image numérique.

Le dispositif informatique interprète (504) des instantanés capturés en valeurs de lecture (510) pour chaque instrument visuel situé sur l'instantané.

Le dispositif informatique construit (505) des données de télémétrie (511) à partir de l'horodatage, des identificateurs d'équipement et d'instruments et de la valeur de lecture.

À des intervalles prédéfinis, le dispositif informatique transmet (506) les données de télémétrie, l'identification du site, du véhicule ou du navire (selon le cas) et, facultativement, la localisation géographique, à un dispositif de communication (109) et, facultativement, vers un ou plusieurs sous-systèmes de visualisation des données (108).

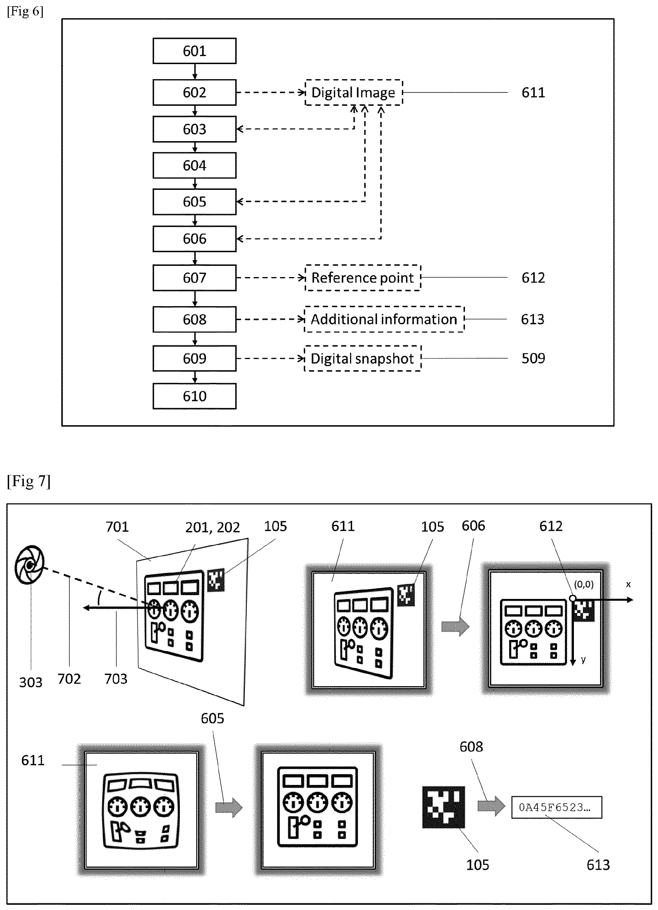

Selon la [Fig 6], la capture d'instantanés numériques est effectuée par des étapes suivantes.

Le dispositif informatique (104) établit (601) la connectivité avec un ou plusieurs dispositifs de capture d'image (103).

Le dispositif de capture d'image prend (602) au moins une image numérique (611) d'un ou plusieurs instruments visuels indépendants (201), panneau d'instruments ou tableau de bord (202) depuis d'au moins une source d'image numérique représentée par un module optique (303) selon la configuration de déploiement (405). Une série d'instantanés peut être pris depuis la même source pour améliorer la qualité de la capture et de l'interprétation ultérieure.

Facultativement, le dispositif de capture d'image ou le dispositif informatique traite (603) les images capturées en utilisant des algorithmes de vision par ordinateur courants, y compris, mais sans s'y limiter, la correction des couleurs, du gamma et de l'histogramme, le flou gaussien et les modifications de la morphologie.

Facultativement, le dispositif de capture d'image ou le dispositif informatique effectue (604) une recherche de repères fiduciaires (105).

Facultativement, le dispositif de capture d'image ou le dispositif informatique effectue une transformation de correction de la distorsion de l'objectif (605) en utilisant l'un des algorithmes de vision par ordinateur courants selon les paramètres de la configuration ou selon la distorsion des repères fiduciaires, si pris en charge par le type de repères fiduciaires utilisés.

Facultativement, le dispositif de capture d'image ou le dispositif informatique effectue une transformation de correction de perspective (606) en fonction de la configuration ou de l'emplacement et de l'orientation des repères fiduciaires.

Facultativement, le dispositif informatique fixe (607) le point de référence (612) à l'emplacement d'un repère fiduciaire.

Facultativement, le dispositif informatique décode (608) les repères fiduciaires trouvés afin de récupérer des informations supplémentaires facultatives (613) telles que les identificateurs du tableau de bord et des instruments indépendants.

Le dispositif informatique génère (609) un instantané numérique (509) qui contient au moins les informations suivantes :
- une image numérique (611)
- facultativement, un point de référence (612)
- facultativement, des informations supplémentaires décodées à partir de repères fiduciaires (613)

Le dispositif informatique sauvegarde (610) l'instantané numérique sur au moins un support de stockage temporaire (403).

Selon la [Fig 7], si le plan de l'instrument surveillé (701) n'est pas perpendiculaire à la ligne de visée (702) du module optique correspondant (303), le dispositif de capture d'image ou le dispositif informatique peut effectuer une correction de perspective (606) en utilisant l'un des algorithmes de vision par ordinateur courants, par exemple une transformation d'homographie. Les paramètres de la transformation pour cette source d'image peuvent être définis dans la configuration de déploiement (405).

Alternativement, si un ou plusieurs repères fiduciaires (105) sont situés sur le plan de l'instrument et peuvent être détectés sur l'image capturée, le dispositif de capture d'image ou le dispositif informatique peut déterminer la normale du plan de l'instrument (703) et l'angle entre la ligne de visée et cette normale et calculer la transformation de correction de perspective requise (606). Les algorithmes de telles opérations sont bien connus pour les types de repères fiduciaires correspondants.

Si un repère fiduciaire est trouvé sur l'image, le dispositif informatique peut définir son emplacement comme un point de référence (612) à utiliser pour toutes les opérations suivantes. La définition d'un point de référence rend le procédé plus résistant aux vibrations et aux éventuels déplacements occasionnels des dispositifs de capture d'image ou de leurs modules optiques correspondants.

Si un repère fiduciaire est trouvé sur l'image, le dispositif informatique peut également en extraire (608) des identifiants de tableau de bord, de panneau et d'instrument codés et d'autres informations (613) présentant un intérêt pour le procédé.

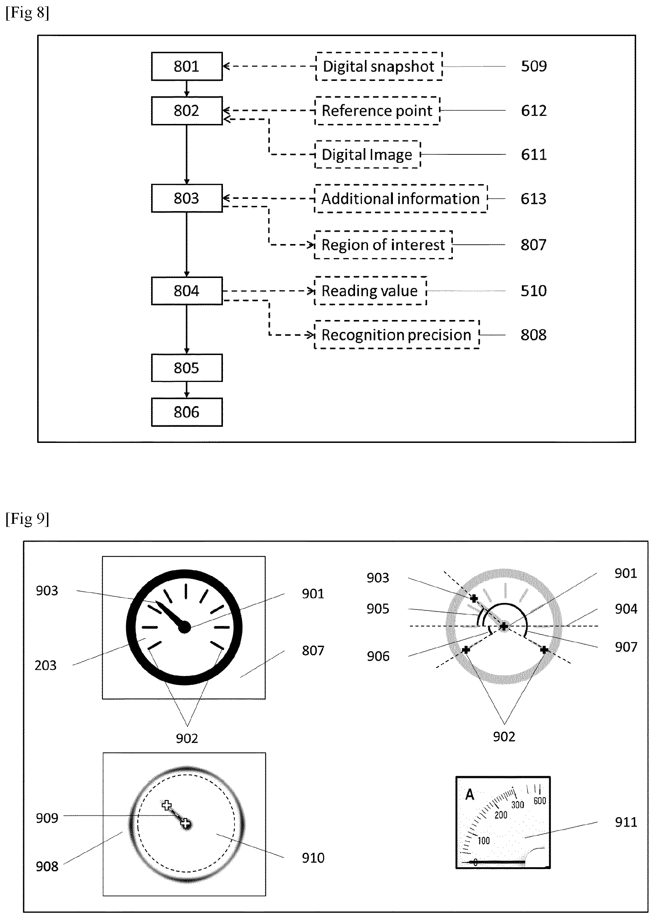

Selon la [Fig 8], à des intervalles prédéfinis, le dispositif informatique interprète des instantanés capturés. Plusieurs instantanés peuvent être interprétés en parallèle si le dispositif informatique est capable d'exécuter des processus parallèles.

Un instantané numérique (509) est lu (801) à partir d'au moins un support de stockage temporaire (403).

Si l'instantané contient des informations sur un point de référence (612), le dispositif informatique déplace (802) l'origine du système de coordonnées vers le point de référence et toutes les opérations suivantes sur l'image numérique (611) sont effectuées dans le nouveau système de coordonnées.

Selon la configuration ou selon des informations supplémentaires sauvegardées dans l'instantané, le dispositif informatique extrait (803) de l'image numérique une région d'intérêt (807) pour chaque instrument visuel individuel qui doit être présent sur l'instantané capturé.

Selon le type de l'instrument individuel et la configuration, le dispositif informatique exécute (804) un procédé de lecture d'instrument pour la région sélectionnée qui résulte en une valeur de lecture (510) et une précision de lecture (808).

Une fois la lecture de l'instrument individuel obtenue, le dispositif informatique doit vérifier (805) que la précision de lecture renvoyée par le procédé de lecture est supérieure ou égale à la valeur de précision acceptable définie dans la configuration. Le dispositif informatique doit également vérifier que la valeur de lecture se situe entre les valeurs minimale et maximale autorisées pour cet instrument selon la configuration. Le non-respect de ces deux conditions invalide la lecture.

Il est possible que plusieurs instantanés traités par le procédé pendant un cycle d'opération captent le même instrument. Cela peut être dû au fait que le dispositif informatique a demandé pas un, mais une série d'instantanés à partir de la même source d'image, mais également au fait que plusieurs sources d'image peuvent capter le même instrument. Dans ce cas, le procédé doit vérifier (806) qu'il n'existe aucune autre lecture du même instrument dans un autre instantané déjà interprété avec une précision de lecture plus élevée que l'actuel.

Selon la [Fig 9], si l'instrument surveillé est une jauge circulaire analogique (203) avec un pointeur en forme d'aiguille, le procédé de lecture utilise un algorithme d'apprentissage automatique pour la vision par ordinateur afin de détecter l'emplacement de l'extrémité (903) de l'aiguille et, facultativement, l'emplacement du point fixe (901) de l'aiguille autour de laquelle il tourne, et les emplacements des repères d'échelle minimale et maximale (902).

Le procédé complet peut être implémenté comme suit :
1) entraînement, avant de déployer la solution, d'un réseau neuronal convolutif (CNN) de détection de points clés (estimation de pose) sur une multitude d'échantillons d'images de jauges circulaires analogiques différentes, étiquetées avec l'emplacement de l'extrémité de l'aiguille et, facultativement, avec l'emplacement du point fixe de l'aiguille et, facultativement, avec les emplacements des repères d'échelle de valeur minimale et maximale sur chaque image
2) détection, par le dispositif informatique, dans la région d'intérêt (807), de l'emplacement d'extrémité de l'aiguille et récupération de la précision correspondante de la détection en exécutant le réseau neuronal préalablement entraîné
3) récupération, par le dispositif informatique, des emplacements du point fixe de l'aiguille et des repères d'échelle de valeur minimale et maximale de l'instrument, soit à partir de la configuration, soit depuis les résultats de l'exécution du réseau neuronal
4) calcul de l'angle (905) formé par une ligne imaginaire passant par le point fixe (901) de l'aiguille et par l'extrémité détectée de l'aiguille (903) avec une ligne imaginaire horizontale (904) passant par le point fixe de l'aiguille
5) calcul l'angle (906) formé par une ligne imaginaire passant par le point fixe de l'aiguille et par le repère d'échelle de valeur minimale avec une ligne imaginaire horizontale passant par le point fixe de l'aiguille
6) calcul l'angle (907) formé par une ligne imaginaire passant par le point fixe de l'aiguille et par le repère d'échelle de valeur maximale avec une ligne imaginaire horizontale passant par le point fixe de l'aiguille
7) calcul, par le dispositif informatique, de la valeur numérique représentant la lecture de l'instrument (510) située entre les valeurs minimale et maximale de la jauge en fonction du rapport des angles calculés.

Dans certaines situations, lorsque les conditions d'éclairage du milieu environnant sont constantes, le procédé de lecture des jauges circulaire analogique avec un pointeur en forme d'aiguille peut être mise en œuvre sans utiliser d'algorithmes d'apprentissage automatique comme suit :
1) récupération, par le dispositif informatique, des emplacements du point fixe de l'aiguille (901) et des repères d'échelle de valeur minimale et maximale (902) de l'instrument à partir de la configuration
2) traitement, par le dispositif informatique, de la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration
3) exécution, par le dispositif informatique, dans la région d'intérêt traitée (908) d'un algorithme de vision par ordinateur de détection de ligne, y compris, mais sans s'y limiter, le détecteur de segments de ligne (LSD), « Hough Line Transform » et « Canny Edge Detection » afin de trouver un segment de ligne le plus proche du point fixe de l'aiguille, située dans la zone acceptable (910) définie en fonction de la configuration de l'instrument individuel
4) calcul, par le dispositif informatique, de la valeur numérique représentant la lecture (510) de la jauge circulaire analogique en utilisant les coordonnées de l'extrémité extérieure du segment de ligne trouvé et les coordonnées du point fixe, des repères d'échelle de valeur minimale et maximale de manière similaires à l'approche décrit ci-dessus.

Pour certains instruments analogiques, y compris, mais sans s'y limiter, les ampèremètres en fer en mouvement (« moving iron »), l'échelle de l'instrument peut être non uniforme (911). Par exemple, certains ampèremètres utilisent une échelle de loi carrée. Pour de tels instruments, un calcul mathématique correspondant doit être effectué pour transformer le résultat de la lecture, obtenue en utilisant l'un des processus ci-dessus, depuis une échelle uniforme à celle utilisée par l'instrument.

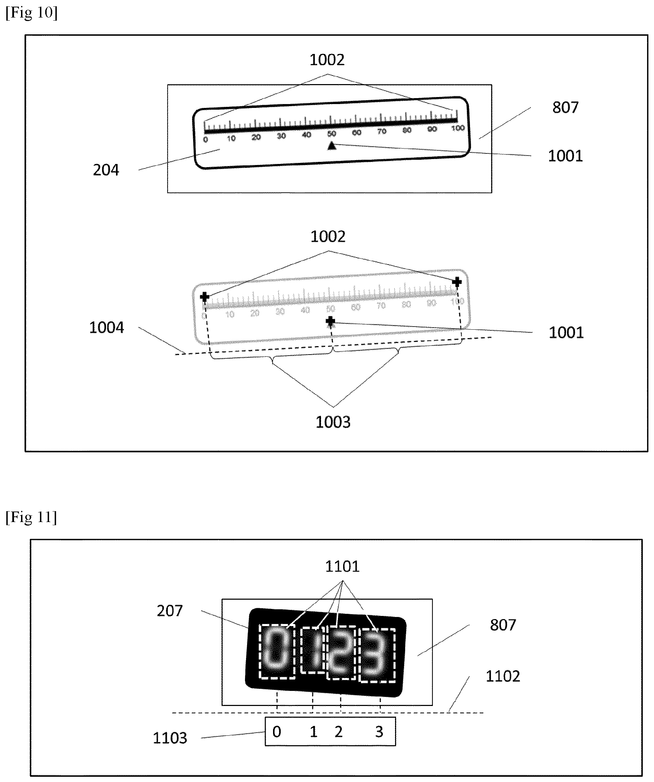

Selon la [Fig 10], si l'instrument surveillé est une jauge linéaire analogique (204), le procédé de lecture utilise un algorithme d'apprentissage automatique pour la vision par ordinateur afin de détecter l'emplacement du pointeur (1001).

Le processus complet peut être implémenté comme suit :
1) entraînement, avant de déployer la solution, d'un réseau neuronal convolutif (CNN) de détection de points clés (estimation de pose) sur une multitude d'échantillons d'images de jauges linéaires analogiques différentes, étiquetées avec l'emplacement du pointeur et, facultativement, avec les emplacements des repères d'échelle de valeur minimale et maximale sur chaque image
2) détection, par le dispositif informatique, dans la région d'intérêt (807), de l'emplacement du pointeur (1001) et récupération de la précision correspondante de la détection en exécutant le réseau neuronal préalablement entraîné
3) récupération, par le dispositif informatique, des emplacements des repères d'échelle de valeur minimale et maximale de l'instrument (1002), soit à partir de la configuration, soit depuis les résultats de l'exécution du réseau neuronal
4) calcul, par le dispositif informatique, de la valeur numérique représentant la lecture de l'instrument (510), en fonction du rapport des longueurs des segments de ligne (1003) formés par projection des repères d'échelle de valeur minimale et maximale et de l'emplacement du pointeur détecté sur une ligne imaginaire (1004) parallèle à l'échelle de l'instrument ou à une ligne imaginaire horizontale ou verticale, selon la configuration.

Comme pour certaines jauges circulaires analogiques, pour certaines jauges linéaires analogiques, un calcul mathématique correspondant doit être effectué pour transformer le résultat de la lecture depuis l'échelle uniforme à celle utilisée par l'instrument.

Si l'instrument surveillé est un afficheur alphanumérique digital (205), mécanique (206) ou à LED (207), le procédé de lecture de l'instrument comprend :
1) traitement, par le dispositif informatique, de la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration
2) exécution, par le dispositif informatique, dans la région d'intérêt traitée d'un algorithme de vision par ordinateur de reconnaissance optique de caractères (OCR), par exemple le Tesseract OCR, selon les paramètres de réglage fin pour l'instrument individuel trouvés dans la configuration
3) récupération, par le dispositif informatique, de la valeur alphanumérique représentant la lecture d'instrument (510) et la précision de lecture correspondante.

Selon la [Fig 11], si l'instrument surveillé est un afficheur alphanumérique à LED (207), l'algorithme d'OCR peut aboutir à une précision de lecture insuffisante. Dans ce cas-là le procédé de lecture utilise un algorithme d'apprentissage automatique pour la vision par ordinateur pour détecter des caractères alphanumériques.

Le processus complet peut être implémenté comme suit :
1) entraînement, avant de déployer la solution, d'un réseau neuronal convolutif (CNN) de détection d'objets sur une multitude d'échantillons d'images de différents afficheur alphanumérique à LED étiquetés avec des emplacements et des valeurs de chaque caractère alphanumérique trouvés sur chaque image
2) détection, par le dispositif informatique, dans la région d'intérêt (807), des emplacements et des valeurs de caractères alphanumériques individuels (1101) et récupération de la précision correspondante de la détection en exécutant le réseau neuronal préalablement entraîné
3) calcul, par le dispositif informatique, de la valeur alphanumérique représentant la lecture de l'instrument (510) en concaténant les valeurs des caractères détectés (1103) en fonction des emplacements de leurs projections sur une ligne imaginaire horizontale ou verticale (1102)

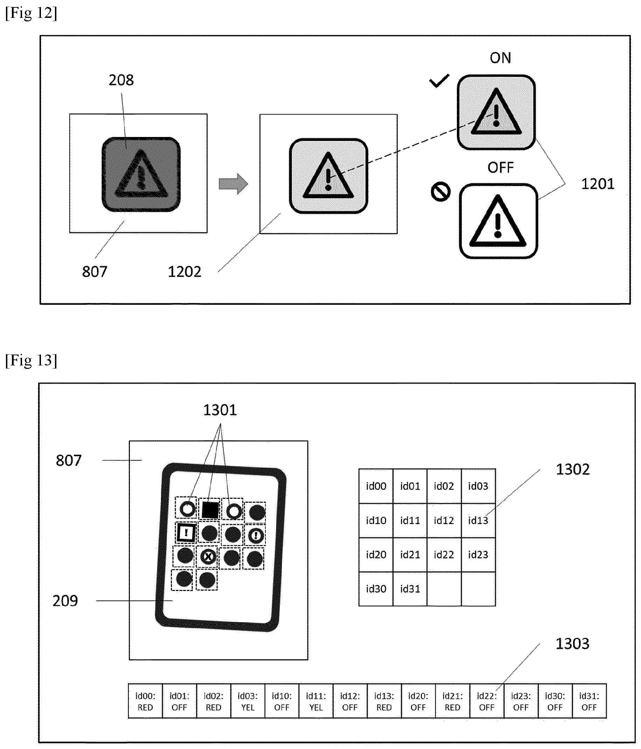

Selon la [Fig 12], si l'instrument surveillé est un voyant lumineux individuel (208), le procédé de lecture utilise un algorithme de vision par ordinateur pour détecter l'état du voyant.

Le processus complet peut être implémenté comme suit :
1) capture des images de modèle numérique (1201) représentant tous les états possibles du voyant (allumé, éteint, couleurs de lumière alternatives, le cas échéant) et leur stockage dans la configuration avec les valeurs des états correspondantes
2) traitement, par le dispositif informatique, de la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration
3) exécution, par le dispositif informatique, dans la région d'intérêt traitée (1202), de l'algorithme de vision par ordinateur de soustraction d'image contre les modèles numériques du voyant individuel sauvegardé dans la configuration
4) récupération, par le dispositif informatique, de la valeur représentant la lecture de l'instrument à une valeur d'état correspondant au modèle le plus proche.

Selon la [Fig 13], si l'instrument surveillé est un jeu de voyants lumineux (209), le procédé de lecture utilise un algorithme d'apprentissage automatique pour de vision par ordinateur pour détecter les couleurs des voyants lumineux correspondants.

Le processus complet peut être implémenté comme suit :
1) entraînement, avant de déployer la solution, d'un réseau neuronal convolutif (CNN) de détection d'objets sur une multitude d'échantillons d'images de différents voyants lumineux indépendants et des jeux de voyants lumineux étiquetés avec les emplacements et les couleurs de chaque voyant lumineux trouvé sur chaque image
2) récupération, par le dispositif informatique, de la matrice (1302) définissant les emplacements relatifs des voyants lumineux individuels et leurs identifiants correspondants à partir de la configuration ou des informations supplémentaires (613) associées à l'instantané
3) détection, par le dispositif informatique, dans la région d'intérêt (807), des emplacements et des couleurs des voyants lumineux individuels (1301) et récupération de la précision correspondante de la détection en exécutant le réseau neuronal préalablement entraîné
4) calcul, par le dispositif informatique, en fonction des emplacements relatifs des lumières individuelles détectées et de la matrice (1302), la valeur représentant la lecture de l'instrument (510) en forme d'une liste de paires (1303) : identifiant de voyant individuel, code couleur détecté.

La configuration peut définir une correspondance entre l'état de l'indicateur et la couleur de l'indicateur. Les états « alerte » ou « ON » peuvent correspondre, par exemple, à la couleur rouge ou orange. Les états « inactif » ou « OFF » peuvent correspondre, par exemple, à la couleur noire ou grise.

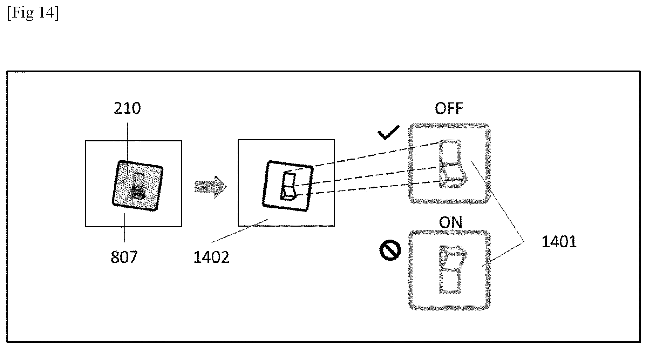

Selon la [Fig 14], si l'instrument surveillé est un dispositif de commande physique (210), y compris, mais sans s'y limiter, des interrupteurs, boutons poussoirs et rotatifs, poignées et leviers, le procédé de lecture utilise un algorithme de vision par ordinateur pour détecter l'état de dispositif.

Le processus complet peut être implémenté comme suit :
1) capture des images de modèle numérique (1401) représentant tous les états possibles du dispositif de commande (marche, arrêt, état alphanumérique, etc.) et leur stockage dans la configuration avec les valeurs des états correspondantes
2) traitement, par le dispositif informatique, de la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration
3) exécution, par le dispositif informatique, dans la région d'intérêt traitée (1402), un algorithme de vision par ordinateur de mise en correspondance de modèles contre les modèles numériques de l'instrument individuel sauvegardés dans la configuration
4) récupération, par le dispositif informatique, de la valeur représentant la lecture de l'instrument à une valeur d'état correspondant au modèle de correspondance le plus proche.

Comme une alternative à l'algorithme de mise en correspondance, l'algorithme de vision par ordinateur de soustraction d'image peut être appliqué pour détecter le modèle correspondant le plus proche.

Un ou plusieurs dispositifs de capture d'image et un dispositif informatique peuvent être intégrés dans un appareil emballé dans une ou plusieurs enceintes connectées par le moyen de réseaux informatiques filaires ou sans fil ou de connexions par câble série et capable d'exécuter le procédé.

Le système, le procédé et l'appareil selon l'invention sont particulièrement destinés à la surveillance numérique non intrusive des équipements et machines existants.

## Revendications

1. Procédé de fourniture de données de télémétrie de machines et d'équipements existants, comprenant les étapes suivantes :
• lire (501), par un dispositif informatique, une configuration de déploiement ;
• récupérer (502), par un dispositif informatique, l'horodatage actuel (507) à partir d'une source fiable de l'heure actuelle et, facultativement, la localisation géographique actuelle (508) à partir d'une source capable de fournir la localisation géographique ;
• capter (503), par un dispositif de capture d'image à la demande du dispositif informatique, au moins un instantané numérique (509) d'au moins un instrument visuel, un panneau d'instrument ou un tableau de bord à partir d'au moins une source d'image numérique ;
• interpréter (504), par le dispositif informatique, chaque instantané capturé en au moins une valeur de lecture (510) pour chaque instrument visuel présent sur l'instantané ;
• construire (505), par le dispositif informatique, au moins une donnée de télémétrie (511), comprenant au moins l'horodatage, les identifiants d'équipement et d'instrument, et la valeur de lecture ;
• transmettre (506), à des intervalles prédéfinis, par le dispositif informatique, au moins une donnée de télémétrie et, dans le cas échéant, de l'emplacement géographique actuel à un dispositif ou à un sous-système de communication ;
la capture d'au moins un instantané numérique (503) est effectuée conformément à la configuration de déploiement (405) et comprend les étapes suivantes :
• établir (601) la connectivité entre le dispositif informatique et au moins un dispositif de capture d'image ;
• prendre (602), par le dispositif de capture d'image, au moins une image numérique (611) d'un ou plusieurs instruments visuels indépendants (201), panneau d'instruments ou tableau de bord (202) depuis au moins une source d'image numérique ;
• traiter (603), par le dispositif de capture d'image ou par le dispositif informatique, les images capturées en utilisant des algorithmes de vision par ordinateur courants, y compris, mais sans s'y limiter, la correction des couleurs, du gamma et de l'histogramme, le flou gaussien et les modifications de la morphologie ;
• rechercher (604), par le dispositif de capture d'image ou par le dispositif informatique, zéro ou plusieurs repères fiduciaires (105) sur l'image numérique ;
• effectuer (605), par le dispositif de capture d'image ou par le dispositif informatique, une transformation de correction de la distorsion de l'objectif selon la configuration ou en analysant la distorsion des repères fiduciaires ;
• effectuer (606), par le dispositif de capture d'image ou par le dispositif informatique, si le plan de l'instrument capturé (701) n'est pas perpendiculaire à la ligne de visée (702) de la source d'image correspondante, une transformation de correction de perspective selon la configuration ou en fonction de l'emplacement et de l'orientation des repères fiduciaires ;
• fixer (607), par le dispositif informatique, un point de référence (612) à l'emplacement d'un repère fiduciaire trouvé;
• décoder (608), par le dispositif informatique, les repères fiduciaires trouvés sur l'image afin de récupérer des informations supplémentaires facultatives (613) y compris, mais sans s'y limiter les identificateurs d'instruments et d'équipement et les coordonnées des régions d'intérêt ;
• générer (609), par le dispositif informatique, un instantané (509) contenant l'image numérique traité (611), et, facultativement, le point de référence (612), et, facultativement, des informations supplémentaires (613) décodées à partir de repères fiduciaires ;
• sauvegarder (610), par le dispositif informatique, l'instantané généré sur au moins un support de stockage temporaire, l'interprétation des instantanés est exécutée par le dispositif informatique, selon la configuration de déploiement (405), dans un mode de traitement séquentiel ou parallèle, et comprend les étapes suivantes :
• lire (801) au moins un instantané (509) depuis au moins un support de stockage temporaire,
• déplacer (802) l'origine d'un système de coordonnées de l'image numérique (611) vers le point de référence (612), s'il a été sauvegardé dans l'instantané ;
• extraire (803) de l'image numérique, une région d'intérêt (807) pour au moins un instrument visuel individuel, selon la configuration, ou selon des informations supplémentaires (613) sauvegardées dans l'instantané ;
• exécuter (804) un procédé de lecture d'instrument pour la région extraite, afin d'obtenir un résultat sous forme de la valeur de lecture (510) de l'instrument individuel et de la précision de lecture (808) ;
• vérifier (805) que la précision de lecture renvoyée par le procédé de lecture est supérieure ou égale à la valeur de précision acceptable définie dans la configuration et que la valeur de lecture se situe entre les valeurs minimale et maximale autorisées pour cet instrument selon la configuration ;
• vérifier (806) qu'il n'existe aucune autre lecture du même instrument dans un autre instantané déjà interprété avec une précision de lecture plus élevée que l'actuel.

2. Procédé selon la revendication 1, **caractérisé en ce que** l'instrument individuel est une jauge circulaire analogique (203) avec un pointeur en forme d'aiguille, le procédé de lecture d'instrument est exécuté par le dispositif informatique et comprend les étapes suivantes :
• récupérer, si disponible, les emplacements du point fixe de l'aiguille et des repères d'échelle de valeur minimale et maximale de l'instrument, depuis la configuration ;
• détecter dans la région d'intérêt (807) l'emplacement de l'extrémité de l'aiguille (903) et, facultativement, l'emplacement du point fixe de l'aiguille et, facultativement, les emplacements des repères d'échelle de valeur minimale et maximale, et récupérer la précision correspondante de la détection en exécutant un modèle d'apprentissage automatique de détection de points clés, entraîné sur une multitude d'échantillons d'images de différentes jauges circulaires analogiques, étiquetées avec l'emplacement de l'extrémité de l'aiguille, et, facultativement, avec l'emplacement du point fixe de l'aiguille et, facultativement, avec les emplacements des repères d'échelle de valeur minimale et maximale sur chaque image ;
• calculer la valeur numérique représentant la lecture (510) de la jauge circulaire analogique à partir du rapport de l'angle (905) formé par une ligne horizontale imaginaire (904) passant par le point fixe et une ligne imaginaire passant par le point fixe et par l'extrémité de l'aiguille, à l'angle (906) formé par une ligne horizontale imaginaire passant par le point fixe et une ligne imaginaire passant par le point fixe et par la repère d'échelle de valeur minimale, à l'angle (907) formé par une ligne horizontale imaginaire passant par le point fixe et une ligne imaginaire passant par le point fixe et le repère d'échelle de valeur maximale ;
• transformer, pour les instruments analogiques à échelle non uniforme (911), la valeur de la lecture de l'échelle uniforme à celle utilisée par l'instrument.

3. Procédé selon la revendication 1, **caractérisé en ce que** l'instrument individuel est une jauge circulaire analogique (203) avec un pointeur en forme d'aiguille et lorsque les conditions d'éclairage du milieu environnant sont constantes, le procédé de lecture d'instrument est exécuté par le dispositif informatique et comprend les étapes suivantes :
• récupérer, les emplacements du point fixe de l'aiguille et des repères d'échelle de valeur minimale et maximale de l'instrument, depuis la configuration ;
• traiter la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration ;
• exécuter, dans la région d'intérêt traitée (908), un algorithme de vision par ordinateur de détection de ligne, afin de trouver un segment de ligne le plus proche du point fixe de l'aiguille, située dans la zone acceptable (910) définie dans la configuration de l'instrument individuel ;
• calculer la valeur numérique représentant la lecture (510) de la jauge circulaire analogique à partir du rapport de l'angle (905) formé par une ligne horizontale imaginaire (904) passant par le point fixe et une ligne imaginaire passant par le point fixe et par l'extrémité extérieure du segment de ligne trouvé, à l'angle (906) formé par une ligne horizontale imaginaire passant par le point fixe et une ligne imaginaire passant par le point fixe et par la repère d'échelle de valeur minimale, à l'angle (907) formé par une ligne horizontale imaginaire passant par le point fixe et une ligne imaginaire passant par le point fixe et le repère d'échelle de valeur maximale ;
• transformer, pour les instruments analogiques à échelle non uniforme (911), la valeur de la lecture de l'échelle uniforme à celle utilisée par l'instrument.

4. Procédé selon la revendication 1, **caractérisé en ce que** l'instrument individuel est une jauge linéaire analogique (204), le procédé de lecture d'instrument est exécuté par le dispositif informatique et comprend les étapes suivantes :
• récupérer, si disponible, les emplacements des repères d'échelle de valeur minimale et maximale (1002) de l'instrument, depuis la configuration ;
• détecter, dans la région d'intérêt (807), l'emplacement du pointeur (1001) et, facultativement, les emplacements des repères d'échelle de valeur minimale et maximale (1002), et récupérer la précision correspondante de la détection en exécutant un modèle d'apprentissage automatique de détection de points clés entraîné sur une multitude d'échantillons d'images de différentes jauges linéaires analogiques étiquetées avec l'emplacement du pointeur et, facultativement, avec des emplacements des repères d'échelle de valeur minimale et maximale sur chaque image ;
• calculer la valeur numérique, représentant la lecture de l'instrument (510), en fonction du rapport des longueurs des segments de ligne (1003) formés par projection des repères d'échelle de valeur minimale et maximale et de l'emplacement du pointeur détecté sur une ligne imaginaire (1004) parallèle à l'échelle de l'instrument ou à une ligne imaginaire horizontale ou verticale, selon la configuration de l'instrument ;
• transformer, pour les instruments analogiques à échelle non uniforme (911), la valeur de la lecture de l'échelle uniforme à celle utilisée par l'instrument.

5. Procédé selon la revendication 1, **caractérisé en ce que** l'instrument individuel est un afficheur alphanumérique digital (205), mécanique (206) ou à LED (207), le procédé de lecture d'instrument est exécuté par le dispositif informatique et comprend les étapes suivantes :
• traiter la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration ;
• exécuter dans la région d'intérêt traitée un algorithme de vision par ordinateur de reconnaissance optique de caractères ;
• récupérer la valeur alphanumérique représentant la lecture d'instrument (510) et la précision de lecture correspondante.

6. Procédé selon la revendication 1, **caractérisé en ce que** l'instrument individuel est un afficheur alphanumérique à LED (207), le procédé de lecture d'instrument est exécuté par le dispositif informatique et comprend les étapes suivantes :
• détecter, dans la région d'intérêt (807), les emplacements et les valeurs des caractères alphanumériques individuels (1101) et récupérer la précision correspondante de la détection en exécutant un modèle d'apprentissage automatique de détection d'objets entraîné sur une multitude d'échantillons d'images de différents afficheurs alphanumérique à LED, étiquetés avec les emplacements et les valeurs de chaque caractère alphanumérique trouvé sur chaque image ;
• calculer une valeur alphanumérique représentant la lecture de l'instrument en concaténant les valeurs des caractères détectés (1103) selon les emplacements de leurs projections sur une ligne imaginaire horizontale ou verticale (1102).

7. Procédé selon la revendication 1, **caractérisé en ce que** l'instrument individuel est un voyant lumineux individuel (208), le procédé de lecture d'instrument est exécuté par le dispositif informatique et comprend les étapes suivantes :
• traiter la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration ;
• exécuter, par le dispositif informatique, dans la région d'intérêt traitée (1202), un algorithme de vision par ordinateur de soustraction d'image contre des images des modèles numériques (1201) représentant tous les états possibles du voyant lumineux, préalablement sauvegardés dans la configuration ;
• récupérer la valeur d'état correspondant au modèle le plus proche.

8. Procédé selon la revendication 1, **caractérisé en ce que** l'instrument individuel est un jeu de voyants lumineux (208), le procédé de lecture d'instrument est exécuté par le dispositif informatique et comprend les étapes suivantes :
• récupérer, par le dispositif informatique, une matrice (1302) définissant les emplacements relatifs des voyants lumineux individuels et leurs identifiants correspondants depuis de la configuration ou à partir des informations supplémentaires (613) associées à l'instantané ;
• détecter, dans la région d'intérêt (807), les emplacements des voyants lumineux individuels (1301), leurs couleurs et la récupérer précision correspondante de la détection en exécutant un modèle d'apprentissage automatique de détection d'objets entraîné sur une multitude d'échantillons d'images de différents voyants lumineux indépendants et de jeux de voyants lumineux étiquetés avec les emplacements et les couleurs de chaque voyant lumineux trouvé sur chaque image ;
• calculer, en fonction des emplacements relatifs des voyants individuels détectés et de la matrice (1302), la valeur représentant la lecture de l'instrument (510) en forme d'une liste de paires (1303) : identifiant de voyant individuel, code couleur détecté ;
• facultativement, transformer le code couleur de chaque voyant détectés en valeur d'état d'instrument.

9. Procédé selon la revendication 1, **caractérisé en ce que** l'instrument individuel est un dispositif de commande physique (210), le procédé de lecture d'instrument est exécuté par le dispositif informatique et comprend les étapes suivantes :
• traiter la région d'intérêt (807) par une série d'opérations de vision par ordinateur, y compris, mais sans s'y limiter, des opérations de seuillage, d'érosion et de dilution en fonction de paramètres de réglage fin pour l'instrument individuel trouvés dans la configuration ;
• exécuter, par le dispositif informatique, dans la région d'intérêt traitée (1402), un algorithme de vision par ordinateur de mise en correspondance de modèles ou de soustraction d'image contre les modèles numériques (1401) représentant tous les états possibles du dispositif de commande (marche, arrêt, état alphanumérique, etc.), préalablement sauvegardés dans la configuration ;
• récupérer la valeur d'état correspondant au modèle le plus proche.

## Patentansprüche

1. Verfahren zum Bereitstellen von Telemetriedaten von bestehenden Maschinen und Anlagen, umfassend die folgenden Schritte:
• Ablesen (501) einer Bereitstellungskonfiguration durch eine Computervorrichtung;
• Abrufen (502) des aktuellen Zeitstempels (507) aus einer zuverlässigen Quelle für die aktuelle Uhrzeit und optional des aktuellen geografischen Standorts (508) aus einer Quelle, die den geografischen Standort bereitstellen kann, durch eine Computervorrichtung;
• Erfassen (503) mindestens einer digitalen Momentaufnahme (509) von mindestens einem visuellen Instrument, einer Instrumententafel oder einem Armaturenbrett aus mindestens einer digitalen Bildquelle, durch eine Bilderfassungsvorrichtung auf Anforderung der Computervorrichtung;
• Interpretieren (504) jeder erfassten Momentaufnahme in mindestens einen Ablesewert (510) für jedes visuelle Instrument, das auf der Momentaufnahme vorhanden ist, durch die Computervorrichtung;
• Erstellen (505) mindestens eines Telemetriedatenelements (511), umfassend mindestens den Zeitstempel, die Anlagen- und Instrumentenkennungen und den Ablesewert, durch die Computervorrichtung;
• Übertragen (506) mindestens eines Telemetriedatenelements und, gegebenenfalls, des aktuellen geografischen Standorts an eine Vorrichtung oder ein Kommunikationssubsystem, in vordefinierten Intervallen durch die Computervorrichtung; das Erfassen der mindestens einen digitalen Momentaufnahme (503) wird gemäß der Bereitstellungskonfiguration (405) durchgeführt und umfasst die folgenden Schritte:
• Herstellen (601) der Konnektivität zwischen der Computervorrichtung und mindestens einer Bilderfassungsvorrichtung;
• Aufnehmen (602) mindestens eines digitalen Bildes (611) von einem oder mehreren unabhängigen visuellen Instrumenten (201), einer Instrumententafel oder einem Armaturenbrett (202) aus mindestens einer digitalen Bildquelle durch die Bilderfassungsvorrichtung;
• Verarbeiten (603) der aufgenommenen Bilder durch die Bilderfassungsvorrichtung oder die Computervorrichtung unter Verwendung gängiger Computer Vision-Algorithmen, einschließlich, aber nicht beschränkt auf Farb-, Gamma- und Histogrammkorrektur, Gaußsche Unschärfe und Morphologieänderungen;
• Suchen (604) nach null oder mehr Bezugsmarkierungen (105) auf dem digitalen Bild durch die Bilderfassungsvorrichtung oder durch die Computervorrichtung;
• Durchführen (605) einer Umwandlung zum Korrigieren der Verzerrung des Objektivs entsprechend der Konfiguration oder durch Analyse der Verzerrung der Bezugsmarkierungen, durch die Bilderfassungsvorrichtung oder durch die Computervorrichtung;
• Durchführen (606) einer perspektivischen Umwandlung zum Korrigieren gemäß der Konfiguration oder in Abhängigkeit von der Position und Ausrichtung der Bezugsmarkierungen, durch die Bilderfassungsvorrichtung oder die Computervorrichtung, wenn die Ebene des erfassten Instruments (701) nicht senkrecht zur Sichtlinie (702) der entsprechenden Bildquelle ist;
• Setzen (607) eines Referenzpunktes (612) an der Stelle einer gefundenen Bezugsmarkierung, durch die Computervorrichtung;
• Decodieren (608) der auf dem Bild gefundenen Bezugsmarkierungen, um optionale Zusatzinformationen (613) abzurufen, einschließlich, aber nicht beschränkt auf Instrumenten- und Anlagenkennungen und Koordinaten von Bereichen von Interesse, durch die Computervorrichtung;
• Generieren (609) einer Momentaufnahme (509), die das verarbeitete digitale Bild (611) und optional den Referenzpunkt (612) sowie optional Zusatzinformationen (613) enthält, die aus Bezugsmarkierungen decodiert wurden, durch die Computervorrichtung;
• Speichern (610) der generierten Momentaufnahme auf mindestens einem temporären Speichermedium durch die Computervorrichtung; das Interpretieren der Momentaufnahmen wird von der Computervorrichtung gemäß der Bereitstellungskonfiguration (405) in einem sequentiellen oder parallelen Verarbeitungsmodus ausgeführt und umfasst die folgenden Schritte:
• Ablesen (801) mindestens einer Momentaufnahme (509) aus mindestens einem temporären Speichermedium,
• Bewegen (802) des Ursprungs eines Koordinatensystems des digitalen Bildes (611) zum Referenzpunkt (612), falls dieser in der Momentaufnahme gespeichert wurde;
• Extrahieren (803) eines Bereichs von Interesse (807) für mindestens ein einzelnes visuelles Instrument aus dem digitalen Bild gemäß der Konfiguration oder gemäß von Zusatzinformationen (613), die in der Momentaufnahme gespeichert sind;
• Ausführen (804) eines Verfahrens zum Ablesen des Instruments für den extrahierten Bereich, um ein Ergebnis in Form des Ablesewerts (510) des einzelnen Instruments und der Ablesegenauigkeit (808) zu erhalten;
• Verifizieren (805), dass die vom Ableseverfahren zurückgegebene Ablesegenauigkeit größer oder gleich dem in der Konfiguration definierten akzeptablen Genauigkeitswert ist und dass der Ablesewert zwischen dem minimalen und dem maximalen Wert liegt, die für dieses Instrument gemäß der Konfiguration zulässig sind;
• Verifizieren (806), dass es keinen weiteren Messwert desselben Instruments in einer anderen Momentaufnahme gibt, die bereits mit einer höheren Ablesegenauigkeit als die aktuelle interpretiert wurde.

2. Verfahren nach Anspruch 1, **dadurch gekennzeichnet, dass** das einzelne Instrument ein analoger Kreismesser (203) mit einem nadelförmigen Zeiger ist, das Verfahren zum Ablesen des Instruments von der Computervorrichtung ausgeführt wird und die folgenden Schritte umfasst:
• Abrufen, falls verfügbar, der Positionen des Nadelfixpunkts und der Skalenmarkierungen für den minimalen und maximalen Wert des Instruments über die Konfiguration;
• Erkennen der Position der Nadelspitze (903) und optional der Position des Nadelfixpunkts sowie optional der Positionen der Skalenmarkierungen für den minimalen und maximalen Wert im Bereich von Interesse (807) und Abrufen der entsprechenden Erkennungsgenauigkeit durch Ausführen eines maschinellen Lernmodells zum Erkennen von Schlüsselpunkten, das anhand einer Vielzahl von Bildproben verschiedener analoger Kreismesser trainiert wurde, die mit der Position der Nadelspitze und optional mit der Position des Nadelfixpunkts und optional mit den Positionen der Skalenmarkierungen für den minimalen und maximalen Wert auf jedem Bild beschriftet sind;
• Berechnen des numerischen Werts, der den Messwert (510) des analogen Kreismessers darstellt, aus dem Verhältnis des Winkels (905), der von einer imaginären horizontalen Linie (904) durch den Fixpunkt und einer imaginären Linie durch den Fixpunkt und das Ende der Nadel gebildet wird, zu dem Winkel (906), der durch eine imaginäre horizontale Linie durch den Fixpunkt und eine imaginäre Linie durch den Fixpunkt und die Skalenmarkierung für den minimalen Wert gebildet wird, zu dem Winkel (907), der durch eine imaginäre horizontale Linie durch den Fixpunkt und eine imaginäre Linie durch den Fixpunkt und die Skalenmarkierung für den maximalen Wert gebildet wird;
• Umwandeln des Ablesewerts der einheitlichen Skala auf den vom Instrument verwendeten Wert, bei analogen Instrumenten mit nicht einheitlicher Skala (911).

3. Verfahren nach Anspruch 1, **dadurch gekennzeichnet, dass** das einzelne Instrument ein analoger Kreismesser (203) mit einem nadelförmigen Zeiger ist und wenn die Beleuchtungsbedingungen der Umgebung konstant sind, das Verfahren zum Ablesen des Instruments von der Computervorrichtung ausgeführt wird und die folgenden Schritte umfasst:
• Abrufen der Positionen des Nadelfixpunkts und der Skalenmarkierungen für den minimalen und den maximalen Wert des Instruments über die Konfiguration;
• Verarbeiten des Bereichs von Interesse (807) durch eine Reihe von Computer Vision-Operationen, einschließlich, aber nicht beschränkt auf Schwellwertbildungs-, Erosions- und Verdünnungsoperationen in Abhängigkeit von Feinabstimmungsparametern für das einzelne Instrument, die in der Konfiguration gefunden werden;
• Ausführen eines Computer Vision-Algorithmus zur Linienerkennung in dem verarbeiteten Bereich von Interesse (908), um ein Liniensegment zu finden, das dem Nadelfixpunkt am nächsten ist und sich innerhalb des akzeptablen Bereichs (910) befindet, der in der Konfiguration des individuellen Instruments definiert ist;
• Berechnen des numerischen Werts, der den Messwert (510) des analogen Kreismessers darstellt, aus dem Verhältnis des Winkels (905), der von einer imaginären horizontalen Linie (904) durch den Fixpunkt und einer imaginären Linie durch den Fixpunkt und das äußere Ende des gefundenen Liniensegments gebildet wird, zu dem Winkel (906), der durch eine imaginäre horizontale Linie durch den Fixpunkt und eine imaginäre Linie durch den Fixpunkt und die Skalenmarkierung für den minimalen Wert gebildet wird, zu dem Winkel (907), der durch eine imaginäre horizontale Linie durch den Fixpunkt und eine imaginäre Linie durch den Fixpunkt und die Skalenmarkierung für den maximalen Wert gebildet wird;
• Umwandeln des Ablesewerts der einheitlichen Skala auf den vom Instrument verwendeten Wert, bei analogen Instrumenten mit nicht einheitlicher Skala (911).

4. Verfahren nach Anspruch 1, **dadurch gekennzeichnet, dass** das einzelne Instrument ein analoger linearer Messer (204) ist, das Verfahren zum Ablesen des Instruments von der Computervorrichtung ausgeführt wird und die folgenden Schritte umfasst:
• Abrufen, falls verfügbar, der Positionen der Skalenmarkierungen für den minimalen und maximalen Wert (1002) des Instruments über die Konfiguration;
• Erkennen, in dem Bereich von Interesse (807), der Position des Zeigers (1001) und optional der Positionen der Skalenmarkierungen für den minimalen und maximalen Wert (1002), und Abrufen der entsprechenden Genauigkeit des Erkennens durch Ausführen eines maschinellen Lernmodells zur Schlüsselpunkterkennung, das anhand einer Vielzahl von Bildproben von verschiedenen analogen linearen Messern trainiert wurde, die mit der Position des Zeigers und optional mit den Positionen der Skalenmarkierungen für den minimalen und maximalen Wert auf jedem Bild beschriftet sind;
• Berechnen des numerischen Werts, der den Messwert des Instruments (510) darstellt, in Abhängigkeit des Verhältnisses der Längen der Liniensegmente (1003), die durch Projektion der Skalenmarkierungen für den minimalen und maximalen Wert und der Position des erkannten Zeigers auf einer imaginären Linie (1004) parallel zur Skala des Instruments oder einer imaginären horizontalen oder vertikalen Linie, gemäß der Konfiguration des Instruments, gebildet werden;
• Umwandeln des Ablesewerts der einheitlichen Skala auf den vom Instrument verwendeten Wert, bei analogen Instrumenten mit nicht einheitlicher Skala (911).

5. Verfahren nach Anspruch 1, **dadurch gekennzeichnet, dass** das einzelne Instrument eine digitale alphanumerische Anzeige (205), eine mechanische Anzeige (206) oder eine LED-Anzeige (207) ist, das Verfahren zum Ablesen des Instruments von der Computervorrichtung ausgeführt wird und die folgenden Schritte umfasst:
• Verarbeiten des Bereichs von Interesse (807) durch eine Reihe von Computer Vision-Operationen, einschließlich, aber nicht beschränkt auf Schwellwertbildungs-, Erosions- und Verdünnungsoperationen in Abhängigkeit von Feinabstimmungsparametern für das einzelne Instrument, die in der Konfiguration gefunden werden;
• Ausführen eines Computer Vision-Algorithmus zur optischen Zeichenerkennung in dem verarbeiteten Bereich von Interesse;
• Abrufen des alphanumerischen Werts, der den Messwert des Instruments (510) und die entsprechende Ablesegenauigkeit darstellt.

6. Verfahren nach Anspruch 1, **dadurch gekennzeichnet, dass** das einzelne Instrument eine alphanumerische LED-Anzeige (207) ist, das Verfahren zum Ablesen des Instruments von der Computervorrichtung ausgeführt wird und die folgenden Schritte umfasst:
• Erkennen der Positionen und Werte einzelner alphanumerischer Zeichen (1101) und Abrufen der entsprechenden Genauigkeit des Erkennens durch Ausführen eines maschinellen Lernmodells zur Objekterkennung, das anhand einer Vielzahl von Bildproben von verschiedenen alphanumerischen LED-Anzeigen trainiert wurde, die mit den Positionen und Werten jedes alphanumerischen Zeichens, das auf jedem Bild gefunden wurde, beschriftet sind, in dem Bereich von Interesse (807);
• Berechnen eines alphanumerischen Werts, der den Messwert des Instruments darstellt, durch Verketten der Werte der erkannten Zeichen (1103) gemäß den Positionen ihrer Projektionen auf eine imaginäre horizontale oder vertikale Linie (1102).

7. Verfahren nach Anspruch 1, **dadurch gekennzeichnet, dass** das einzelne Instrument eine einzelne Leuchtanzeige (208) ist, das Verfahren zum Ablesen des Instruments von der Computervorrichtung ausgeführt wird und die folgenden Schritte umfasst:
• Verarbeiten des Bereichs von Interesse (807) durch eine Reihe von Computer Vision-Operationen, einschließlich, aber nicht beschränkt auf Schwellwertbildungs-, Erosions- und Verdünnungsoperationen in Abhängigkeit von Feinabstimmungsparametern für das einzelne Instrument, die in der Konfiguration gefunden werden;
• Ausführen eines Computer Vision-Algorithmus zur Bildsubtraktion gegen die Bilder der digitalen Modelle (1201), die alle möglichen Zustände der Leuchtanzeige darstellen, die zuvor in der Konfiguration gespeichert wurden, in dem verarbeiteten Bereich von Interesse (1202) durch die Computervorrichtung;
• Abrufen des Zustandswerts, der dem nächstgelegenen Modell entspricht.

8. Verfahren nach Anspruch 1, **dadurch gekennzeichnet, dass** das einzelne Instrument ein Satz Leuchtanzeigen (208) ist, das Verfahren zum Ablesen des Instruments von der Computervorrichtung ausgeführt wird und die folgenden Schritte umfasst:
• Abrufen einer Matrix (1302), die die relativen Positionen der einzelnen Leuchtanzeigen und ihre entsprechenden Kennungen über die Konfiguration oder aus den Zusatzinformationen (613) definiert, die mit der Momentaufnahme verknüpft sind, durch die Computervorrichtung;
• Erkennen der Positionen einzelner Leuchtanzeigen (1301), ihrer Farben und der entsprechenden Abrufgenauigkeit der Erkennung durch Ausführen eines maschinellen Lernmodells zur Objekterkennung, das anhand einer Vielzahl von Bildproben von verschiedenen unabhängigen Leuchtanzeigen und Sätzen von Leuchtanzeigen trainiert wurde, die mit den Positionen und Farben jeder Leuchtanzeige, die auf jedem Bild gefunden wird, beschriftet sind, in dem Bereich von Interesse (807);
• Berechnen des Wertes, der den Messwert des Instruments (510) in Form einer Liste von Paaren (1303) darstellt, in Abhängigkeit der relativen Positionen der erkannten einzelnen Leuchtanzeigen und der Matrix (1302): Kennung der einzelnen Leuchtanzeige, erkannter Farbcode;
• optional Umwandlung des Farbcodes jeder erkannten Leuchtanzeige in den Zustandswert des Instruments.

9. Verfahren nach Anspruch 1, **dadurch gekennzeichnet, dass** das einzelne Instrument eine physische Steuervorrichtung (210) ist, das Verfahren zum Ablesen des Instruments von der Computervorrichtung ausgeführt wird und die folgenden Schritte umfasst:
• Verarbeiten des Bereichs von Interesse (807) durch eine Reihe von Computer Vision-Operationen, einschließlich, aber nicht beschränkt auf Schwellwertbildungs-, Erosions- und Verdünnungsoperationen in Abhängigkeit von Feinabstimmungsparametern für das einzelne Instrument, die in der Konfiguration gefunden werden;
• Ausführen durch die Computervorrichtung, in dem verarbeiteten Bereich von Interesse (1402), eines Computer Vision-Algorithmus zur Modellabgleichung oder Bildsubtraktion gegen die digitalen Modelle (1401), die alle möglichen Zustände der Steuervorrichtung (Ein, Aus, alphanumerischer Zustand usw.) darstellen, die zuvor in der Konfiguration gespeichert wurden;
• Abrufen des Zustandswerts, der dem nächstgelegenen Modell entspricht.

## Claims

1. Method for providing telemetry data of existing machines and equipment, comprising the following steps:
• reading (501), by means of a computer device, a deployment configuration;
• retrieving (502), by means of a computer device, the current time stamp (507) from a reliable source of the current time and, optionally, the current geographical location (508) from a source capable of providing the geographical location;
• capturing (503), by means of an image capture device on request from the computer device, at least one digital snapshot (509) of at least one visual instrument, instrument panel or dashboard from at least one digital image source;
• interpreting (504), by means of the computer device, each captured snapshot into at least one reading value (510) for each visual instrument present in the snapshot;
• constructing (505), by means of the computer device, at least one piece of telemetry data (511), comprising at least the time stamp, the equipment and instrument identifiers, and the reading value;
• transmitting (506), at predefined intervals, by means of the computer device, at least one piece of telemetry data and, if applicable, the current geographical location to a communication device or subsystem; the capture of at least one digital snapshot (503) is carried out in accordance with the deployment configuration (405) and comprises the following steps:
• establishing (601) connectivity between the computer device and at least one image capture device;
• taking (602), by means of the image capture device, at least one digital image (611) of one or more independent visual instruments (201), instrument panel or dashboard (202) from at least one digital image source;
• processing (603), by means of the image capture device or by means of the computer device, the captured images using routine computer vision algorithms, including, but not limited to, color, gamma and histogram correction, Gaussian blur and morphology modifications;
• searching (604), by means of the image capture device or by means of the computer device, for zero or more fiducial marks (105) on the digital image;
• performing (605), by means of the image capture device or by means of the computer device, a lens distortion correction transformation according to the configuration or by analyzing the distortion of the fiducial marks;
• performing (606), by means of the image capture device or by means of the computer device, if the plane of the captured instrument (701) is not perpendicular to the line of sight (702) of the corresponding image source, a perspective correction transformation according to the configuration or based on the location and orientation of the fiducial marks;
• setting (607), by means of the computer device, a reference point (612) at the location of a found fiducial mark;
• decoding (608), by means of the computer device, the fiducial marks found in the image in order to retrieve optional additional information (613) including, but not limited to, instrument and equipment identifiers and coordinates of regions of interest;
• generating (609), by means of the computer device, a snapshot (509) containing the processed digital image (611), and, optionally, the reference point (612), and, optionally, additional information (613) decoded from fiducial marks;
• saving (610), by means of the computer device, the generated snapshot on at least one temporary storage medium, the snapshot interpretation is executed by the computer device, according to the deployment configuration (405), in a sequential or parallel processing mode, and comprises the following steps:
• reading (801) at least one snapshot (509) from at least one temporary storage medium,
• moving (802) the origin of a system of coordinates of the digital image (611) to the reference point (612), if saved in the snapshot;
• extracting (803) from the digital image, a region of interest (807) for at least one individual visual instrument, according to the configuration, or according to additional information (613) saved in the snapshot;
• executing (804) an instrument reading method for the extracted region, in order to obtain a result in the form of the reading value (510) of the individual instrument and the reading precision (808);
• verifying (805) that the reading precision returned by the reading method is greater than or equal to the acceptable precision value defined in the configuration and that the reading value lies between the minimum and maximum values allowed for this instrument according to the configuration;
• verifying (806) that there is no other reading of the same instrument in another snapshot already interpreted with a higher reading precision than the current one.

2. Method according to claim 1, **characterized in that** the individual instrument is an analog circular gauge (203) with a needle-shaped pointer, the instrument reading method is executed by the computer device and comprises the following steps:
• retrieving, if available, the locations of the fixed point of the needle and the minimum and maximum scale marks of the instrument, from the configuration;
• detecting in the region of interest (807) the location of the needle tip (903) and, optionally, the location of the needle fixed point and, optionally, the locations of the minimum and maximum value scale marks, and retrieving the precision corresponding to the detection by running an automatic learning model for detecting key points, which is trained on a multitude of image samples of different analog circular gauges, labeled with the location of the needle tip, and, optionally, with the location of the needle fixed point and, optionally, with the locations of the minimum and maximum value scale marks on each image;
• calculating the numerical value representing the analogue circular gauge reading (510) from the ratio of the angle (905) formed by an imaginary horizontal line (904) passing through the fixed point and an imaginary line passing through the fixed point and the needle tip, to the angle (906) formed by an imaginary horizontal line passing through the fixed point and an imaginary line passing through the fixed point and the minimum value scale mark, to the angle (907) formed by an imaginary horizontal line passing through the fixed point and an imaginary line passing through the fixed point and the maximum value scale mark;
• transforming, for non-uniform scale analog instruments (911), the value of the uniform scale reading to that used by the instrument.

3. Method according to claim 1, **characterized in that** the individual instrument is an analog circular gauge (203) with a needle-shaped pointer and when the lighting conditions of the surrounding environment are constant, the instrument reading method is executed by the computer device and comprises the following steps:
• retrieving the locations of the fixed point of the needle and the minimum and maximum value scale marks of the instrument from the configuration;
• processing the region of interest (807) using a series of computer vision operations, including, but not limited to, thresholding, erosion and dilution operations according to fine-tuning parameters for the individual instrument which are found in the configuration;
• executing, in the processed region of interest (908), a line detection computer vision algorithm, in order to find a line segment closest to the fixed point of the needle, located within the acceptable zone (910) defined in the configuration of the individual instrument;
• calculating the numerical value representing the analog circular gauge reading (510) from the ratio of the angle (905) formed by an imaginary horizontal line (904) passing through the fixed point and an imaginary line passing through the fixed point and the outer end of the line segment found, to the angle (906) formed by an imaginary horizontal line passing through the fixed point and an imaginary line passing through the fixed point and the minimum value scale mark, to the angle (907) formed by an imaginary horizontal line passing through the fixed point and an imaginary line passing through the fixed point and the maximum value scale mark;
• transforming, for non-uniform scale analog instruments (911), the value of the uniform scale reading to that used by the instrument.

4. Method according to claim 1, **characterized in that** the individual instrument is an analog linear gauge (204), the instrument reading method is executed by the computer device and comprises the following steps:
• retrieving, if available, the locations of the minimum and maximum value scale marks (1002) of the instrument, from the configuration;
• detecting, in the region of interest (807), the location of the pointer (1001) and, optionally, the locations of the minimum and maximum value scale marks (1002), and retrieving the precision corresponding to the detection by running an automatic learning model for detecting key points which is trained on a multitude of image samples of different analog linear gauges labeled with the location of the pointer and, optionally, with locations of the minimum and maximum value scale marks in each image;
• calculating the numerical value, representing the instrument reading (510), as a function of the ratio of the lengths of the line segments (1003) formed by projecting the minimum and maximum value scale marks and the location of the detected pointer on an imaginary line (1004) parallel to the instrument scale or to an imaginary horizontal or vertical line, depending on the instrument configuration;
• transforming, for non-uniform scale analog instruments (911), the value of the uniform scale reading to that used by the instrument.

5. Method according to claim 1, **characterized in that** the individual instrument is a digital (205), mechanical (206) or LED (207) alphanumeric display, the instrument reading method is executed by the computer device and comprises the following steps:
• processing the region of interest (807) using a series of computer vision operations, including, but not limited to, thresholding, erosion and dilution operations according to fine-tuning parameters for the individual instrument which are found in the configuration;
• executing an optical character recognition computer vision algorithm in the processed region of interest;
• retrieving the alphanumeric value representing the instrument reading (510) and the corresponding reading precision.

6. Method according to claim 1, **characterized in that** the individual instrument is an LED alphanumeric display (207), the instrument reading method is executed by the computer device and comprises the following steps:
• detecting, in the region of interest (807), the locations and values of individual alphanumeric characters (1101) and retrieving the precision corresponding to the detection by running an automatic learning model for detecting objects which is trained on a multitude of image samples of different LED alphanumeric displays, labeled with the locations and values of each alphanumeric character found in each image;
• calculating an alphanumeric value representing the instrument reading by concatenating the values of the detected characters (1103) according to the locations of their projections on an imaginary horizontal or vertical line (1102).

7. Method according to claim 1, **characterized in that** the individual instrument is an individual indicator light (208), the instrument reading method is executed by the computer device and comprises the following steps:
• processing the region of interest (807) using a series of computer vision operations, including, but not limited to, thresholding, erosion and dilution operations according to fine-tuning parameters for the individual instrument which are found in the configuration;
• executing, by means of the computer device, in the processed region of interest (1202), an image subtraction computer vision algorithm against images of digital models (1201) representing all possible states of the indicator light, previously saved in the configuration;
• retrieving the state value corresponding to the closest model.

8. Method according to claim 1, **characterized in that** the individual instrument is a set of indicator lights (208), the instrument reading method is executed by the computer device and comprises the following steps:
• retrieving, by means of the computer device, a matrix (1302) defining the relative locations of the individual indicator lights and their corresponding identifiers from the configuration or from the additional information (613) associated with the snapshot;
• detecting, in the region of interest (807), the locations of individual indicator lights (1301), their colors and retrieving the precision corresponding to the detection by running an automatic learning model for detecting objects which is trained on a multitude of image samples of different independent indicator lights and sets of indicator lights labeled with the locations and colors of each warning light found in each image;
• calculating, as a function of the relative locations of the individual indicators detected and the matrix (1302), the value representing the reading of the instrument (510) in the form of a list of pairs (1303): individual indicator identifier, color code detected;
• optionally, transforming the color code of each detected indicator into an instrument status value.

9. Method according to claim 1, **characterized in that** the individual instrument is a physical control device (210), the instrument reading method is executed by the computer device and comprises the following steps:
• processing the region of interest (807) using a series of computer vision operations, including, but not limited to, thresholding, erosion and dilution operations according to fine-tuning parameters for the individual instrument which are found in the configuration;
• executing, by means of the computer device, in the processed region of interest (1402), a computer vision algorithm of model matching or image subtraction against the digital models (1401) representing all possible states of the control device (on, off, alphanumeric state, etc.), previously saved in the configuration;
• retrieving the state value corresponding to the closest model.
